# FASCICULE DE BREVET EUROPEEN

(11) **EP 1 470 012 B1**
(45) Date de publication et mention de la délivrance du brevet: **01.08.2007**
(21) Numéro de dépôt: 03715068.7
(22) Date de dépôt: 31.01.2003
(51) Int. Cl.: B60J 7/20

(54) **CAPOT DE COFFRE ARRIERE POUR UN VEHICULE DECOUVRABLE A TOIT REPLIABLE**
KOFFERRAUMDECKEL FÜR EIN CABRIOFAHRZEUG MIT FALTVERDECK
REAR BOOT HOOD FOR AN OPEN-TOP VEHICLE WITH A FOLDING ROOF

(30) Priorité: 01.02.2002 FR 0201232
(43) Date de publication de la demande: 27.10.2004
(73) Titulaire: Société Européenne de Brevets Automobiles, 75011 Paris 11 (FR)
(72) Inventeur: QUEVEAU, Gérard, F-79140 Cerizay (FR); QUEVEAU, Paul, F-79140 Cerizay (FR); GUILLEZ, Jean-Marc, 79140 Cerizay (FR)
(74) Mandataire: Pichat, Thierry
(86) Numéro de dépôt international: PCT/FR2003/000309
(87) Numéro de publication internationale: WO 2003/064195

(56) Documents cités:
- EP-A- 1 084 886
- US-A- 5 655 331
- US-B1- 6 186 577

## Description

La présente invention concerne un capot de coffre arrière pour un véhicule découvrable à toit repliable à l'intérieur du coffre arrière dudit véhicule, ce capot comprenant deux ensembles de pivotement avant adaptés à faire pivoter le capot du coffre arrière de l'arrière vers l'avant et deux ensembles de pivotement arrière adaptés à faire pivoter ledit capot de l'avant vers l'arrière.

La présente invention concerne également un véhicule comportant un tel capot de coffre arrière.

On connaît, d'après le brevet français FR-B-2 777 241 au nom de la demanderesse, un capot du type précité dans lequel chaque ensemble de pivotement est un verrou ayant pour fonction soit le verrouillage, soit l'articulation du capot de façon que celui-ci puisse s'ouvrir soit de l'avant vers l'arrière, soit de l'arrière vers l'avant.

On connaît également, d'après la demande de brevet américain US 2001/0048231 A1, un autre capot de coffre arrière du type précité.

Chacun des ensembles de pivotement comprend une assise fixée à la carrosserie du véhicule, un corps fixé au capot du coffre arrière par un organe formant charnière et comprenant un premier élément d'assemblage adapté à être reçu de manière amovible par un second élément d'assemblage de forme complémentaire faisant partie de l'assise correspondante, et des moyens de verrouillage pour verrouiller le corps dans sa position verrouillée par rapport à ladite assise.

Les moyens de verrouillage décrits dans ce dernier document de l'art antérieur sont constitués par une tige qui coulisse dans la direction transversale du véhicule et qui pénètre dans une ouverture correspondante du corps. Ceci suppose un alignement très précis de cette ouverture du corps par rapport à ladite tige, un tel alignement n'étant pas facile à réaliser pour un capot de coffre arrière de véhicule.

Le but de la présente invention est de proposer un capot de coffre arrière du type précité adapté à guider positivement le capot de coffre arrière à la fin de son mouvement de pivotement pour amener ledit capot avec précision jusqu'à sa position verrouillée.

Suivant la présente invention, le capot de coffre arrière du type précité est caractérisé en ce que les moyens de verrouillage comprennent des moyens formant crochet montés de manière pivotante sur l'assise et adaptés à venir en prise avec une conformation d'appui complémentaire du premier élément d'assemblage pour prendre appui sur cette conformation d'appui et guider la fin du mouvement de pivotement du capot jusqu'à la position verrouillée correspondante.

Ainsi, les moyens formant crochet de l'assise prennent appui sur la conformation d'appui du corps et guident et entraînent positivement le corps et donc le capot jusqu'à la position verrouillée.

Une telle structure est ainsi parfaitement adaptée à tenir compte de tous les jeux et tolérances dus aussi bien aux conditions de montage du capot qu'aux déformations dudit capot lors de ses différents mouvements de pivotement, tout en assurant un guidage positif jusqu'à la position verrouillée dudit capot.

D'autres particularités et avantages de la présente invention apparaîtront dans la description détaillée ci-après.

Aux dessins annexés, donnés à titre d'exemples non limitatifs :
- la figure 1 est une vue schématique partielle, en coupe longitudinale, d'un véhicule découvrable à toit repliable comportant un capot de coffre arrière selon l'art antérieur ;
- les figures 2a et 2b sont des vues agrandies avec arrachements des détails A et B à la figure 1, représentant respectivement un ensemble de pivotement avant et un ensemble de pivotement arrière d'un capot de coffre arrière suivant un mode de réalisation de la présente invention, ledit capot étant dans sa position fermée ;
- les figures 3a et 3b sont des vues semblables respectivement aux figures 2a et 2b, le capot étant représenté dans une position légèrement pivotée de l'arrière vers l'avant ;
- les figures 4a et 4b sont des vues semblables respectivement aux figures 2a et 2b, le capot étant représenté dans une position légèrement pivotée de l'avant vers l'arrière ;
- les figures 5a et 5b sont des vues respectivement semblables aux figures 2a et 2b représentant un autre mode de réalisation de la présente invention ;
- la figure 6 est une vue agrandie en coupe selon VI-VI à la figure 2a, le crochet étant dans sa position verrouillée.
- la figure 7 est une vue semblable à la figure 6, le crochet étant dans sa position déverrouillée et le capot étant sensiblement dans la position représentée à la figure 4a ;
- la figure 8 est une vue semblable à la figure 7 représentant un autre mode de réalisation de la présente invention ;
- la figure 9 est une vue semblable à la figure 6 représentant un autre mode de réalisation de la présente invention;
- la figure 10 est une vue semblable à la figure 9, le crochet étant dans sa position déverrouillée;
- la figure 11 est une vue semblable à la figure 9 correspondant à un autre mode de réalisation de la présente invention ;
- la figure 12 est une vue schématique selon XII-XII à la figure 2b ;
- la figure 13 est une vue schématique partielle en coupe selon XIII-XIII à la figure 8 ;
- la figure 14 est une vue semblable à la figure 5b représentant un autre mode de réalisation de la présente invention.

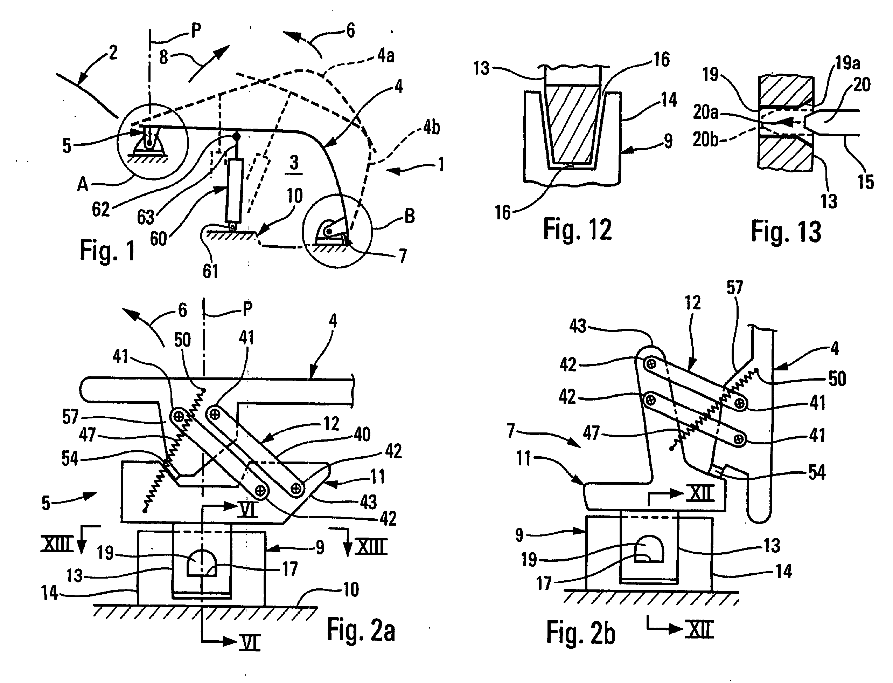

On a représenté schématiquement à la figure 1 un véhicule découvrable, schématisé en 1, dont le toit 2 est repliable à l'intérieur du coffre arrière 3 du véhicule 1. Un tel toit repliable 2 est connu.

Le capot 4 du coffre arrière 3 comprend deux ensembles de pivotement avant 5 adaptés à faire pivoter le capot 4 du coffre arrière 3 de l'arrière vers l'avant, dans le sens de la flèche 6 à la figure 1, jusqu'à la position schématisée en 4a, pour un accès facile au coffre arrière, par exemple pour y déposer des bagages (non représentés).

Le capot 4 pivote de façon classique sous l'action d'au moins un vérin 60, en général sous l'action de deux vérins 60 disposés de part et d'autre du coffre arrière 3. Chaque vérin est articulé à sa base 61 sur la carrosserie 10 du véhicule, et l'extrémité 62 de sa tige 63 est articulée sur le capot 4.

Le capot 4 comprend également deux ensembles de pivotement arrière 7 adaptés à faire pivoter le capot 4 de l'avant vers l'arrière, dans le sens de la flèche 8, jusqu'à la position 4b, pour permettre le passage et le rangement du toit 2 replié à l'intérieur du coffre arrière 3.

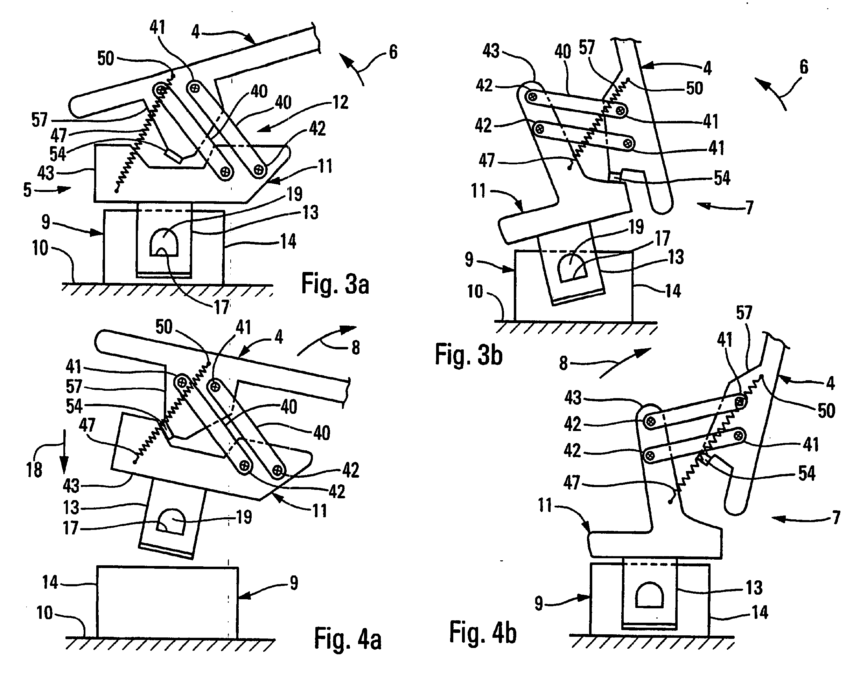

Comme représenté en détail aux figures 2a, 2b, 3a, 3b, 4a, 4b, et 5a, 5b, chacun des ensembles de pivotement 5, 7 comprend une assise 9 fixée à la carrosserie 10 du véhicule, un corps 11 qui est relié au capot 4 du coffre arrière 3 par un organe formant charnière 12 et qui comprend un premier élément d'assemblage 13 adapté à être reçu de manière amovible par un second élément d'assemblage 14 de forme complémentaire faisant partie de l'assise 9 correspondante.

Chaque ensemble de pivotement 5, 7 comporte également des moyens de verrouillage pour verrouiller le corps 11 dans sa position verrouillée par rapport à l'assise correspondante 9.

Suivant la présente invention, les moyens de verrouillage comprennent des moyens formant crochet 15 montés de manière pivotante sur l'assise 9 et adaptés à venir en prise avec une conformation d'appui complémentaire du premier élément d'assemblage 13 pour prendre appui sur cette conformation d'appui et guider positivement la fin du mouvement de pivotement du capot 4 jusqu'à la position verrouillée correspondante.

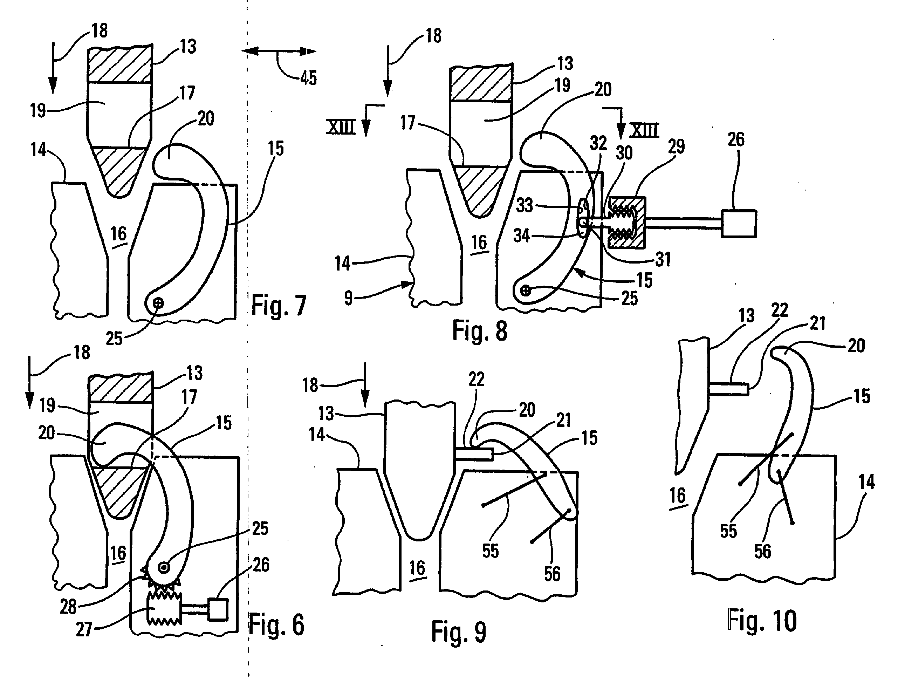

Comme représenté notamment aux figures 6 à 12, le premier élément d'assemblage 13 est un élément mâle sensiblement en forme de coin, et le second élément d'assemblage 14 est un élément femelle comportant une cavité 16 sensiblement en forme de coin adaptée à recevoir le premier élément mâle 13.

La forme de coin des premier et second éléments d'assemblage 13 et 14 assure un guidage précis de la fin du mouvement de pivotement du capot 4 vers sa position fermée verrouillée.

La forme de coin de chaque premier élément d'assemblage mâle 13 et la forme de coin de chaque second élément d'assemblage femelle 14 s'entendent selon un plan vertical P s'étendant transversalement par rapport au capot 4, qui est parallèle aux plans des figures 6 et 12 (voir figures 1, 2a et 2b).

Dans le mode de réalisation schématisé aux figures 6 et 7, le premier élément d'assemblage 13 en forme de coin comporte une paroi 17 sensiblement perpendiculaire à la trajectoire, schématisée par la flèche 18, du premier élément 13 arrivant dans sa position verrouillée dans la cavité 16 de l'assise 9.

Dans ce mode de réalisation, la paroi 17 constitue la base d'une ouverture 19 dans laquelle peut pénétrer l'extrémité libre 20 du crochet 15.

Le crochet 15 est conformé et disposé, sur l'assise 9, de manière telle que son extrémité libre 20 appuie sur la paroi 17 pour solliciter le premier élément d'assemblage 13 dans le sens de la flèche 18 vers la position verrouillée de la figure 6, et de verrouiller cet élément 13 dans cette position verrouillée.

En particulier, le crochet 15 est conformé de manière à s'opposer à toute tentative d'ouverture du capot 4, dans la mesure où un effort dirigé verticalement vers le haut s'exerçant sur le premier élément d'assemblage 13 n'exerce sur le crochet 15 aucune force tendant à faire pivoter le crochet 15, vers la droite à la figure 6, vers sa position déverrouillée de la figure 7.

De la même manière, le crochet 15 est conformé et agencé sur l'assise 11 par rapport à la paroi 17 et à l'ouverture 19 de façon telle q'il est adapté à venir en prise avec la paroi 17 dans une position de l'élément 13 aussi distante que possible de la position verrouillée de cet élément 13 représentée à la figure 6. Le crochet 15 est ainsi un élément moteur commandant la fin du mouvement de pivotement du capot 4, en coopération avec les vérins 60.

Dans le mode de réalisation schématisé aux figures 9 et 10, le premier élément d'assemblage 13 comporte un ergot 21 faisant saillie transversalement vers le crochet 15, et le crochet 15 est conformé et disposé sur l'assise 9 de manière telle que son extrémité libre 20 appuie sur l'ergot 21 pour solliciter le premier élément d'assemblage 13 dans le sens de la flèche 18 vers sa position verrouillée dans l'assise 9 correspondante, schématisée à la figure 9, et verrouiller ledit premier élément d'assemblage 13 dans cette position verrouillée.

Dans ce mode de réalisation, la surface supérieure 22 de l'ergot 21 est sensiblement horizontale lorsque le capot 4 est dans sa position fermée ce qui permet une réalisation particulièrement simple de l'ergot 21.

La coopération entre l'extrémité 20 du crochet 15 et la surface supérieure 22 de l'ergot 21 est organisée comme décrit ci-dessus pour la paroi 17.

Dans ce mode de réalisation, le crochet 15 est monté de manière pivotante à une extrémité de deux bras pivotants 55,56 dont l'autre extrémité est montée de manière pivotante sur le second élément d'assemblage 14.

L'un au moins ou chacun des deux bras 55 et 56 pourrait être un vérin de longueur variable.

Ce mode de réalisation permet à l'extrémité 20 du crochet 15 de prendre appui sur la paroi 17 (ou 22) à une distance de la position verrouillée plus grande que dans le cas du crochet pivotant des figures 6 à 8. En effet, par rapport à l'axe 66 de pivotement du bras inférieur 56 sur le second élément d'assemblage 14, l'axe 65 de pivotement du crochet 15 à l'extrémité dudit bras inférieur 56 est situé à la figure 10, dans la position déverrouillée du crochet 15, dans laquelle le bras 56 a une position voisine de la verticale, à un niveau plus haut que son niveau à la figure 9, dans la position verrouillée dudit crochet 15, dans laquelle le bras 56 a une position voisine de l'horizontale.

On peut bien entendu donner à la surface supérieure 22 de l'ergot 21 une forme autre que plane et une orientation autre que l'orientation horizontale de la figure 9.

Dans l'exemple de la figure 13, l'ouverture 19 a en coupe transversale une forme évasée 19a vers le crochet 15, et une largeur à peine supérieure à celle du crochet 15. Ainsi, lorsque l'extrémité 20 du crochet 15 pénètre dans l'ouverture 19 (flèche 20a), la forme évasée 19a oblige l'élément 13 à se centrer par rapport au crochet 15, de sorte que le capot 4 se trouve parfaitement centré lorsque chaque crochet 15 est dans sa position verrouillée dans laquelle l'extrémité libre 20 occupe la position schématisée en tirets en 20b.

Le capot 4 comporte des moyens pour faire pivoter chaque crochet 15 dans un sens ou dans l'autre autour de son axe de pivotement 25 pour verrouiller ou libérer le premier élément d'assemblage 13.

Ces moyens pour faire pivoter chaque crochet 15 peuvent être des moyens connus quelconques, et comprennent en général un moteur, schématisé en 26.

Dans le mode de réalisation de la figure 6, le moteur 26 entraîne une vis sans fin 27 engrenée avec une denture 28 solidaire du crochet 15 et centrée sur l'axe 25 de pivotement du crochet 15.

Dans le mode réalisation de la figure 7, le moteur, non représenté, est adapté à faire tourner directement l'arbre de pivotement 25 du crochet -15. Le moteur peut être monté directement sur l'arbre 25, ou faire tourner l'arbre 25 par l'intermédiaire d'un jeu d'engrenage et/ou d'un cardan ou par l'intermédiaire d'un câble flexible de transmission de mouvement.

Dans le mode de réalisation de la figure 8, le moteur 26 est adapté à entraîner un écrou fixe pivotant 29 dont la rotation déplace une vis coulissante 30 portant une bille 31 prenant appui sur une paroi 32 ou sur l'autre paroi 33 d'une lumière 34 ménagée dans le crochet 15.

Dans le mode de réalisation des figures 9 et 10, le moteur, non représenté, est adapté à faire tourner l'un des deux bras pivotants 55, 56 articulés chacun à une extrémité sur le second élément d'assemblage 14 et à l'autre extrémité sur le crochet 15.

Dans le mode de réalisation de la figure 11, le moteur 26 entraîne un pignon 27a engrené avec une crémaillère coulissante 35 portant un doigt 36 prenant appui sur une paroi 37 ou l'autre paroi 38 d'une encoche 39 ménagée dans le crochet 15 et débouchant sur le bord de celui-ci.

Dans le mode de réalisation représenté aux figures 2a, 2b, 3a, 3b, 4a, 4b, l'organe formant charnière 12 de chaque ensemble de pivotement 5, 7 comprend deux bielles 40 sensiblement parallèles articulées à une extrémité 41 sur un gousset 57 porté par le capot 4 et à leur autre extrémité 42 sur un bras 43 solidaire du premier élément d'assemblage 13 correspondant.

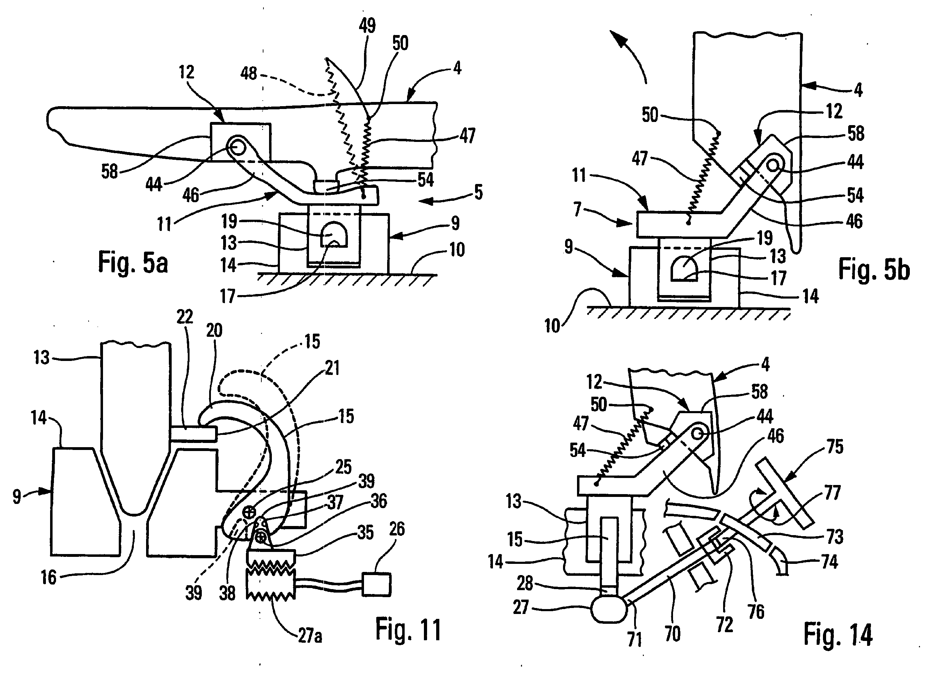

Dans le mode de réalisation des figures 5a et 5b, l'organe formant charnière 12 de chaque ensemble de pivotement 5, 7 est un axe de pivotement 44 s'étendant dans la direction transversale 45 du capot 4 (voir figure 7) et porté, d'une part par des goussets 58 fixés sur le capot 4, d'autre part par un bras 46 du corps 11 sur lequel est fixé, le premier élément mâle 13 d'assemblage en forme de coin correspondant.

Chaque ensemble de pivotement 5, 7 comprend en outre un ressort de rappel 47 placé entre le capot 4 et le corps 11 correspondant et rappelant le capot 4 dans sa position fermée des figures 2a et 2b ou 5a et 5b.

On a schématisé à la figure 5a en 48 et en tirets la position du ressort 47 dans la position ouverte de l'arrière vers l'avant du capot 4, et en 49 la trajectoire de l'extrémité 50 du ressort 47 fixée au capot 4.

Près de chaque organe formant charnière 12, le capot 4 porte une butée, schématisée en 54, qui peut si besoin être réglable, qui permet de positionner l'un par rapport à l'autre le premier élément d'assemblage mâle 13 et le second élément d'assemblage femelle 14 correspondants.

On a ainsi décrit plusieurs modes de réalisation d'un capot de coffre arrière permettant, par l'action positive du crochet 15, un guidage précis et fiable, sans heurt et sans choc, du capot 4 vers sa position verrouillée, ce guidage étant commandé automatiquement par un moteur 26 qui actionne le crochet 15.

En cas de panne des moyens de verrouillage et de déverrouillage précités, qui sont logés dans le coffre arrière 3 du véhicule, il est nécessaire de prévoir des moyens permettant de déverrouiller manuellement au moins les deux ensembles de pivotement arrière pour permettre l'accès à l'intérieur du coffre arrière 3.

Dans l'exemple de réalisation schématisé à la figure 14, on a représenté le crochet 15 muni d'une denture 28 engrenée avec une vis sans fin 27, comme illustré à la figure 6.

Dans cet exemple, on peut faire pivoter le crochet 15, en prise directe, vers sa position déverrouillée, au moyen d'un arbre 70 dont l'extrémité intérieure 71 est en prise avec la denture 28 par des moyens non représentés connus de l'homme du métier.

L'extrémité extérieure 72 de l'arbre 70 est accessible depuis l'extérieur du véhicule à travers un capuchon escamotable 73 prévu sur le bouclier 74.

Après avoir oté le capuchon 73, on introduit un outil, schématisé en 75, dont l'extrémité libre 76 présente une conformation complémentaire de celle de l'extrémité extérieure 72 de l'arbre 70.

Par exemple, l'extrémité libre 76 de l'outil 75 comporte une conformation mâle de section carrée adaptée à venir en prise avec une conformation femelle de section carrée complémentaire de l'extrémité extérieure 72 de l'arbre 70.

Ainsi, au moyen de l'outil à main 75, livré avec le véhicule, on peut faire tourner l'arbre 70 pour faire pivoter le crochet 15 (flèche 77)

D'une manière générale, pour un autre mode de commande du pivotement du crochet 15, il suffit d'intervenir d'une manière appropriée au niveau du réducteur intercalé entre le moteur 26 et le crochet 15, d'une manière quelconque connue en elle-même.

Bien entendu, la présente invention n'est pas limitée aux modes de réalisation que l'on vient de décrire, et on peut apporter à ceux-ci de nombreux changements et modifications sans sortir du domaine de l'invention, tel que défini par les revendications.

On peut ainsi remplacer les formes en coin des éléments d'assemblage 13 et 14 par des formes tronconiques ou des formes en tronc de pyramide assurant un guidage à la fois dans un plan longitudinal et dans un plan transversal.

On pourrait également prévoir l'assise 9, le crochet 15 et le moteur 26 sur le capot 4 et le corps 11 sur la carrosserie 10 du véhicule.

## Revendications

1. - Capot (4) de coffre arrière (3) pour un véhicule découvrable (1) dont le toit (2) est repliable à l'intérieur du coffre arrière (3) dudit véhicule (1), comprenant deux ensembles de pivotement avant (5) adaptés à faire pivoter le capot (4) du coffre arrière (3) de l'arrière vers l'avant et deux ensembles de pivotement arrière (7) adaptés à faire pivoter ledit capot (4) de l'avant vers l'arrière, chacun des ensembles de pivotement (5, 7) comprenant une assise (9) fixée à la carrosserie (10) du véhicule (1), un corps (11) qui est relié au capot (4) du coffre arrière (3) par un organe formant charnière (12) et qui comprend un premier élément d'assemblage (13) adapté. à être reçu de manière amovible par un second élément d'assemblage (14) de forme complémentaire faisant partie de l'assise (9) correspondante, et des moyens de verrouillage comprenant des moyens formant crochet (15) montés de manière pivotante sur l'assise (9) et adaptés à venir en prise avec une conformation d'appui complémentaire (17, 21) du premier élément d'assemblage (13) pour prendre appui sur cette conformation d'appui (17, 21) et pour verrouiller le corps (11) dans sa position verrouillée par rapport à ladite assise (9), **caractérisé en ce que** le crochet 15 est conformé et agencé sur l'assise (9) de façon telle qu'il vient en prise avec ladite conformation d'appui complémentaire (17, 21) du premier élément d'assemblage (13) dans une position de celui -ci aussi distante que possible de sa position verrouillée et guide ainsi, pendant son pivotement, la fin du mouvement de pivotement du capot (4) jusqu'à la position verrouillée correspondante.

2. - Capot de coffre arrière selon la revendication 1, **caractérisé en ce que** le premier élément d'assemblage (13) comporte une paroi (17) sensiblement perpendiculaire à la trajectoire (18) dudit premier élément (13) arrivant dans sa position verrouillée dans l'assise (9) correspondante, et **en ce que** le crochet (15) est conformé et disposé de manière telle que son extrémité libre (20) appuie sur ladite paroi (17) pour solliciter le premier élément d'assemblage (13) vers, et verrouiller ce dernier dans, sa position verrouillée dans l'assise (9) correspondante.

3. - Capot de coffre arrière selon la revendication 1, **caractérisé en ce que** le premier élément d'assemblage (13) comporte un ergot (21) faisant saillie transversalement vers le crochet (15), et **en ce que** le crochet (15) est conformé et disposé de manière telle que son extrémité libre (20) appuie sur ledit ergot (21) pour solliciter le premier élément d'assemblage (13) vers, et verrouiller ce dernier dans, sa position verrouillée dans l'assise (9) correspondante.

4. - Capot de coffre arrière selon l'une quelconque des revendications précédentes, **caractérisé en ce qu'**il comporte des moyens pour faire pivoter chaque crochet (15) dans un sens ou dans l'autre pour verrouiller ou libérer le premier élément d'assemblage (13), ces moyens de pivotement comprenant un moteur (26) adapté à faire tourner directement l'arbre (25) de pivotement du crochet (15), ou à entraîner une vis sans fin (27) engrenée avec une denture (28) solidaire du crochet (15) ou un pignon (27a) engrené avec une crémaillère (35) portant un doigt (36) prenant appui sur une paroi (37) ou l'autre paroi (38) d'une encoche (39) ménagée dans le crochet (15), ou à entraîner un écrou pivotant fixe (29) dont la rotation déplace une vis (30) portant une bille (31) prenant appui sur une paroi (32) ou l'autre paroi (33) d'une lumière (34) ménagée dans le crochet (15), ou à faire tourner l'un de deux bras pivotants (55, 56) articulés chacun à une extrémité sur le second élément d'assemblage (14) et à l'autre extrémité sur le crochet (15).

5. - Capot de coffre arrière selon l'une quelconque des revendications précédentes, **caractérisé en ce que** le premier élément d'assemblage (13) est un élément mâle sensiblement en forme de coin, et le second élément d'assemblage (14) est un élément femelle comportant une cavité (16) sensiblement en forme de coin adaptée à recevoir ledit premier élément mâle (13).

6. - Capot de coffre arrière selon la revendication 5, **caractérisé en ce que**, la forme de coin de chaque élément d'assemblage (13, 14) s'entend selon un plan vertical s'étendant transversalement par rapport au capot (4).

7. - Capot de coffre arrière selon l'une quelconque des revendications précédentes, **caractérisé en ce que** l'organe formant charnière (12) de chaque ensemble de pivotement (5,7) est un arbre de pivotement (44) s'étendant dans la direction transversale (45) du capot (4) et porté par un bras (46) sur lequel est fixé l'élément mâle (13) en forme de coin correspondant.

8. - Véhicule découvrable (1) à toit (2) repliable dans le coffre arrière (3) dudit véhicule (1), **caractérisé en ce qu'**il comporte un capot (4) de coffre arrière selon l'une quelconque des revendications précédentes.

9. - Véhicule découvrable (1) selon la revendication 8, **caractérisé en ce qu'**il comporte en outre des moyens, par exemple du type vérins (60), pour commander le pivotement du capot (4) dans un premier sens (6), de l'arrière vers l'avant, ou dans l'autre sens (8), de l'avant vers l'arrière, entre sa position fermée et l'une ou l'autre de ses positions ouvertes (4a, 4b), ce véhicule comportant avantageusement des moyens pour déverrouiller manuellement au moins les deux ensembles de pivote ment arrière (7) depuis l'extérieur du véhicule.

10. - Véhicule découvrable (1) selon la revendication 8, **caractérisé en ce que**:
- il comporte en outre des moyens, de préférence des vérins (60), pour commander le pivotement du capot (4) dans un premier sens (6), de l'arrière vers l'avant,
ou dans l'autre sens (8), de l'avant vers l'arrière, entre sa position fermée et l'une ou l'autre de ses positions ouvertes (4a, 4b),
- et le crochet (15) commande la fin du mouvement de pivotement du capot (4), en coopération avec les moyens, de préférence lesdits vérins (60), de commande en pivotement du capot.

11. - Procédé pour verrouiller un capot (4) de coffre arrière (3) d'un véhicule découvrable (1) dont le toit (2) est repliable à l'intérieur dudit coffre (3), le capot comprenant deux ensembles de pivotement avant (5) adaptés à le faire pivoter de l'arrière vers l'avant, et deux ensembles de pivotement arrière (7) adaptés à le faire pivoter de l'avant vers l'arrière, chacun des ensembles de pivotement (5, 7) comprenant une assise (9) fixée à la carrosserie (10) du véhicule (1), un corps (11) qui est relié au capot (4) du coffre arrière (3) par un organe formant charnière (12) et qui comprend un premier élément d'assemblage (13) adapté à être reçu de manière amovible par un second élément d'assemblage (14) de forme complémentaire faisant partie de l'assise (9) correspondante, ce procédé comprenant des étapes dans lesquelles:
- on fait pivoter le capot (4) par rapport à la carrosserie, par l'intermédiaire de moyens, de préférence des vérins (60), de commande en pivotement du capot,
- et on verrouille le capot en position verrouillée par rapport à la carrosserie par l'intermédiaire de moyens de verrouillage comprenant des moyens formant crochet (15) montés de manière pivotante sur l'assise (9) et venant en prise avec une conformation d'appui complémentaire (17, 21) du premier élément d'assemblage (13) en prenant appui sur elle, verrouillant ainsi le corps (11) dans sa position verrouillée par rapport à ladite assise (9),
**caractérisé en ce que**, alors que le capot (4) est encore à distance de sa position verrouillée, on commande la fin de son mouvement de pivotement, jusqu'à cette position verrouillée, par l'intermédiaire desdits moyens formant crochet (15) qui guident, pendant leur pivotement, la fin du mouvement du capot (4), en coopération avec lesdits moyens, de préférence lesdits vérins (60), de commande en pivotement de ce capot.

## Claims

1. A lid (4) of a rear trunk (3) for a convertible vehicle (1) whose roof (2) is foldable into the rear trunk (3) of said vehicle (1), the lid having two front pivot assemblies (5) adapted to cause the lid (4) of the rear trunk (3) to pivot from the rear to the front , and two rear pivot assemblies (7) adapted to cause said lid (4) to pivot from the front to the rear, each of the pivot assemblies (5, 7) comprising a base (9) secured to the bodywork (10) of the vehicle (1), a body (11) connected to the lid (4) of the rear trunk (3) by a hinge-forming member (12) and comprising a first engaging element (13) adapted to be releasably received by a second engaging element (14) of complementary shape forming part of the corresponding base (9), and locking means comprising hook-forming means (15) pivotally mounted on the base (9) and adapted to engage with a complementary bearing shape (17, 21) of the first engaging element (13) to bear against said bearing shape (17, 21), and for locking the body (11) in its position where it is locked relative to said base (9), the lid being **characterized in that** the hook 15 is shaped and arranged on the seat (9) in such a manner that it becomes engaged with said complementary bearing shape (17, 21) of the first engaging element (13) in a position thereof that is as far as possible from its locking position, and thus guides during its pivoting movement the end of the pivoting movement of the lid (4) into the corresponding locked position.

2. A rear trunk lid according to claim 1, **characterized in that** the first engaging element (13) includes a wall (17) extending substantially perpendicularly to the path (18) of said first element (13) coming into its locked position in the corresponding base (9), and **in that** the hook (15) is shaped and disposed in such a manner that its free end (20) bears against said wall (17) to urge the first engaging element (13) towards its locked position in the corresponding base (9) and to lock it therein.

3. A rear trunk lid according to claim 1, **characterized in that** the first engaging element (13) includes a lug (21) projecting transversely towards the hook (15), and **in that** the hook (15) is shaped and disposed in such a manner that its free end (20) bears against said lug (21) to urge the first engaging element (13) towards its locked position in the corresponding base (9), and to lock it therein.

4. A rear trunk lid according to any preceding claim, **characterized in that** it includes means for causing each hook (15) to pivot in one direction or the other in order to lock or release the first engaging element (13), the pivot means comprising a motor (26) adapted to turn the pivot pin (25) of the hook (15) directly or to drive a wormscrew (27) meshing with a set of teeth (28) secured to the hook (15) or a gearwheel (27a) meshing with a rack (35) carrying a finger (36) bearing against one wall (37) or the other wall (38) of a notch (39) formed in the hook (15), or to drive a stationary pivoting nut (29) which on rotating drives a screw (30) carrying a ball (31) bearing against one wall (32) or the other wall (33) of a slot (34) formed in the hook (15), or to cause one of two pivot arms (55, 56) each hinged at one end to the second engaging element (141) and at the other end to the hook (15) to turn.

5. A rear trunk lid according to any preceding claim, **characterized in that** the first engaging element (13) is a male element that is substantially wedge-shaped, and the second engaging element (14) is a female element including a cavity (16) that is substantially wedge-shaped and adapted to receive said male, first element (13).

6. A rear trunk lid according to claim 5, **characterized in that** the wedge shape of each engaging element (13, 14) extends in a vertical plane extending transversely relative to the lid (4).

7. A rear trunk lid according to any preceding claim, **characterized in that** the hinge-forming member (12) of each pivot assembly (5, 7) is a pivot pin (44) extending in the transverse direction (45) of the lid (4) and carried by an arm (46) having the corresponding wedge-shaped male element (13) secured thereto.

8. A convertible vehicle (1) having a roof (2) that is foldable into the rear trunk (3) of said vehicle (1), the vehicle being **characterized in that** it includes a rear trunk lid (4) according to any preceding claim.

9. A convertible vehicle (1) according to claim 8, **characterized in that** it further includes means, e.g. actuator type means (60), for causing the lid (4) to pivot from the rear to the front in a first direction (6) or from the front to the rear in the opposite direction (8) between its closed position and one or other of its open positions (4a, 4b), the vehicle advantageously including means for manually unlocking at least one of the two rear pivot assemblies (7) from outside the vehicle.

10. A convertible vehicle (1) according to claim 8, **characterized in that**:
it further includes means, preferably actuator means (60), for causing the lid (4) to pivot forwards in a first direction (6) or rearwards in the opposite direction (8) between its closed position and one or other of its open positions (4a, 4b), and
· the hook (15) controls the end of the pivoting movement of the lid (4) by co-operating with the means, preferably said actuator means (60), for controlling pivoting of the cap.

11. A method of locking a lid (4) of a rear trunk (3) of a convertible vehicle (1) whose roof (2) is foldable into said trunk (3), the lid having two front pivot assemblies (5) adapted to cause it to pivot from the rear to the front, and two rear pivot assemblies (7) adapted to cause it to pivot from the front to the rear, each of the pivot assemblies (5, 7) comprising a base (9) secured to the bodywork (10) of the vehicle (1), a body (11) connected to the lid (4) of the rear trunk (3) by a hinge-forming member (12) and comprising a first engaging element (13) adapted to be releasably received by a second engaging element (14) of complementary shape forming part of the corresponding base (9), the method comprising steps in which:
· the lid (4) is caused to pivot relative to the bodywork using means, preferably actuator means (60), for controlling the pivoting of the lid; and
· the lid is locked in a position where it is locked relative to the bodywork by means of locking means comprising hook-forming means (15) pivotally mounted on the base (9) and becoming engaged with a complementary bearing shape (17, 21) of the first engaging element (13) by bearing thereon, thereby locking the body (11) in its position where it is locked relative to said base (9), said method being **characterized in that** while the lid (4) is still at a distance from its locked position, the end of its pivoting movement is controlled, into said locked position, by means of said hook-forming means (15) which, while pivoting, guide the end of the movement of the lid (4) by co-operating with said means, preferably said actuator means (60), for controlling pivoting of the lid.

## Patentansprüche

1. Deckel (4) für den heckseitigen Kofferraum (3) für ein aufklappbares Fahrzeug (1), dessen Dach (2) in das Innere des heckseitigen Kofferraumes (3) des Fahrzeugs (1) zusammenklappbar ist, wobei zwei vordere Schwenkeinheiten (5) so ausgebildet sind, dass diese den Deckel (4) des heckseitigen Kofferraumes (3) von hinten nach vorne schwenken lassen, und zwei hintere Schwenkeinheiten (7) so ausgebildet sind, dass diese den Deckel (4) von vorne nach hinten schwenken lassen, wobei jede der Schwenkeinheiten (5, 7) aufweist einen Unterbau (9), der an der Karosserie (10) des Fahrzeugs (1) befestigt ist, einen Körper (11), der durch ein Scharnierorgan (12) mit dem Deckel (4) des heckseitigen Kofferraumes (3) verbunden ist und der ein erstes Montageelement (13) aufweist, das so ausgebildet ist, dass dieses in beweglicher Weise von einem zweiten Montageelemente (14) in komplementärer Form aufgenommen werden kann, das einen Teil des entsprechenden Unterbaus (9) bildet, und eine Verriegelungseinrichtung, die Hakenmitteln (15) aufweist, die schwenkbar auf dem Unterbau (9) angebracht sind und so ausgebildet sind, dass diese mit einem komplementären Auflager (17, 21) des ersten Montageelements (13) in Angriff kommen, um sich auf diesem Auflager (17, 21) abzustützen und um den Körper (11) in seiner Verriegelungsstellung in Bezug zu dem Unterbau (9) zu verriegeln, **dadurch gekennzeichnet, dass** der Haken (15) derart auf dem Unterbau (9) ausgebildet und angeordnet ist, dass dieser mit dem komplementären Auflager (17, 21) des ersten Montageelements (13) in Angriff kommt, in einer Stellung desselben die so weit wie möglich von seiner Verriegelungsstellung entfernt liegt, und auf diese Weise während seines Schwenkvorgangs das Ende der Schwenkbewegung des Deckels (4) bis in die entsprechende Verriegelungsstellung führt.

2. Deckel für den heckseitigen Kofferraum nach Anspruch 1, **dadurch gekennzeichnet, dass** das erste Montageelement (13) eine Wand (17) aufweist, die im Wesentlichen senkrecht zu der Bewegungsbahn (18) des in seine Verriegelungsposition im korrespondierenden Unterbau (9) ankommenden ersten Elements (13) verläuft, und dass der Haken (15) in der Weise ausgebildet und angeordnet ist, dass sein freies Ende (20) an die Wand (17) angreift, um das erste Montageelement (13) zu seiner Verriegelungsstellung in dem korrespondierenden Unterbau (9) zu belasten und in dieser zu verriegeln.

3. Deckel für den heckseitigen Kofferraum nach Anspruch 1, **dadurch gekennzeichnet, dass** das erste Montageelement (13) einen Dorn (21) aufweist, der quer zum Haken (15) vorsteht, und dass der Haken (15) derart ausgebildet und angeordnet ist, dass sein freies Ende (20) an den Dorn (21) angreift, um das erste Montageelement (13) zu seiner Verriegelungsstellung in dem korrespondierenden Unterbau (9) zu belasten und in dieser zu verriegeln.

4. Deckel für den heckseitigen Kofferraum nach einem der vorstehenden Ansprüche, **dadurch gekennzeichnet, dass** dieser eine Einrichtung umfasst, um jeden Haken (15) in die eine oder andere Richtung schwenken zu lassen, um das erste Montageelement (13) zu verriegeln oder freizugeben, wobei diese Schwenkeinrichtung aufweist einen Motor (26), der so ausgelegt ist, dass dieser eine Drehwelle (25) des Hakens (15) direkt in Drehung versetzt oder einen Drehzapfen (27), der mit einer fest mit dem Haken (15) verbundenen Zahnreihe (28) kämmt, oder ein Zahnrad (27a), das mit einer Zahnstange (35) kämmt, die einen Finger (36) trägt, der an einer Wand (37) oder einer anderen Wand (38) einer in dem Haken (15) ausgebildeten Aussparung (39) anschlägt, antreibt, oder eine sich festdrehende Schraube (29) antreibt, deren Drehung eine Schraube (30) verschiebt, die eine Kugel (31) trägt, welche an einer Wand (32) oder einer anderen Wand (33) eines Loches (34) angreift, das in dem Haken (15) ausgebildet ist, oder einen von zwei Schwenkarmen (55, 56) in Drehung versetzt, die jeweils mit einem Ende auf dem zweiten Montageelement (14) und mit den anderen Ende auf dem Haken (15) angelenkt sind.

5. Deckel für den heckseitigen Kofferraum nach einem der vorstehenden Ansprüche, **dadurch gekennzeichnet, dass** das erste Montageelement (13) ein im Wesentlichen keilförmiges Steckelement ist und das zweite Montageelement (14) ein Aufnahmeelement ist, das einen im Wesentlichen keilförmigen Raum (16) aufweist, der so ausgebildet, dass dieser das erste Steckelement (13) aufnehmen kann.

6. Deckel für den heckseitigen Kofferraum nach Anspruch 5, **dadurch gekennzeichnet, dass** sich die Keilform jedes Montageelements (13, 14) entlang einer vertikalen Ebene erstreckt, die sich quer zum Deckel (4) erstreckt.

7. Deckel für den heckseitigen Kofferraum nach einem der vorstehenden Ansprüche, **dadurch gekennzeichnet, dass** das Scharnierorgan (12) jeder Schwenkeinheit (5, 7) eine Drehwelle (44) ist, die sich in der Querrichtung (45) des Deckels (4) erstreckt und durch einen Arm (46) gehalten wird, auf welchem das entsprechende keilförmige Steckelement (13) befestigt ist.

8. Aufklappbares Fahrzeug (1) mit einem in den heckseitigen Kofferraum (3) des Fahrzeugs (1) zurückklappbaren Dach (2), **dadurch gekennzeichnet, dass** dieses einen Deckel (4) für den heckseitigen Kofferraum gemäß einem der vorstehenden Ansprüche umfasst.

9. Aufklappbares Fahrzeug (1) nach Anspruch 8, **dadurch gekennzeichnet, dass** dieses ferner Mittel umfasst, zum Beispiel in der Bauart von Zylindern (60), um die Schwenkbewegung des Deckels (4) in einer ersten Richtung (6) von hinten nach vorne oder in einer weiteren Richtung (8) von vorne nach hinten zwischen seiner geschlossenen Position und der einen oder anderen seiner Öffnungspositionen (4a, 4b) zu steuern, wobei dieses Fahrzeug in vorteilhafter Weise Mittel umfasst, um wenigstens die beiden hinteren Schwenkeinheiten (7) von außerhalb des Fahrzeugs aus manuell entriegeln zu können.

10. Aufklappbares Fahrzeug (1) nach Anspruch 8, **dadurch gekennzeichnet, dass**.
- dieses ferner Mitteln umfasst, vorzugsweise Zylinder (60), um die Schwenkbewegung des Deckels (4) in einer ersten Richtung (6) von hinten nach vorne oder in einer weiteren Richtung (8) von vorne nach hinten zwischen seiner geschlossenen Position und der einen oder anderen seiner Öffnungspositionen (4a, 4b) zu steuern,
- und der Haken (15) das Ende der Schwenkbewegung des Deckels (4) in Kooperation mit den Mitteln, vorzugsweise den Zylindern (60), zur Steuerung der Schwenkbewegung des Deckels steuert.

11. Verfahren zum Verriegeln eines Deckels (4) eines heckseitigen Kofferraumes (3) eines aufklappbaren Fahrzeugs (1), dessen Dach (2) in das Innere des Kofferraumes (3) zurückklappbar ist, wobei der Deckel zwei vordere Schwenkeinheiten (5) umfasst, die so ausgebildet sind, dass sie diesen von hinten nach vorne schwenken lassen, und zwei heckseitige Schwenkeinheiten (7) umfasst, die so ausgebildet sind, dass sie diesen von vorne nach hinten schwenken lassen, wobei jede der Schwenkeinheiten (5, 7) einen Unterbau (9) umfasst, der an der Karosserie (10) des Fahrzeugs (1) befestigt ist, einen Körper (11), der mit dem Deckel (4) des heckseitigen Kofferraumes (3) durch ein Scharnierorgan (12) verbunden ist und der eine erste Montageeinheit (13) umfasst, die so ausgebildet ist, dass sie in beweglicher Weise durch ein zweites Montageelement (14) aufgenommen werden kann, das in komplementärer Form einen Teil des korrespondierenden Unterbaus (9) bildet, wobei dieses Verfahren die folgenden Schritte umfasst:
- Schwenken des Deckels (4) in Bezug zu der Karosserie mithilfe von Mitteln, vorzugsweise Zylindern (16), zur Steuerung einer Schwenkbewegung des Deckels,
- und Verriegeln des Deckels in einer in Bezug zu der Karosserie verriegelten Position mithilfe von Verriegelungsmitteln, die Hakenmitteln (15) umfasst, welche in drehbarer Weise auf dem Unterbau (9) montiert sind und mit einem komplementären Anschlaggebilde (17, 21) des ersten Montageelements (13) in Angriff kommen und auf diesem aufliegen, wobei sie auf diese Weise den Körper (11) in seiner Verriegelungsposition in Bezug zu dem Unterbau (9) verriegeln, **dadurch gekennzeichnet, dass**, während sich der Deckel (4) noch in Abstand zu seiner Verriegelungsposition befindet, das Ende seiner Schwenkbewegung bis zu dieser Verriegelungsposition mithilfe der Hakenmittel (15) gesteuert wird, welche während ihrer Drehbewegung das Bewegungsende des Deckels (4) in Kooperation mit den Mitteln, vorzugsweise den Zylindern (60), zur Steuerung einer Schwenkbewegung des Deckels steuern.
